(19) Europäisches Patentamt / European Patent Office / Office européen des brevets

(11) **EP 1 935 732 B1**

(12) **FASCICULE DE BREVET EUROPEEN**

(45) Date de publication et mention de la délivrance du brevet:
**25.06.2014 Bulletin 2014/26**

(51) Int Cl.:
*B60T 8/172* (2006.01)    *B60T 8/1763* (2006.01)

(21) Numéro de dépôt: **07291409.6**

(22) Date de dépôt: **27.11.2007**

(54) **Procédé de commande adaptatif de freinage pour véhicule**

Adaptatives Bremssteurungsverfahren für Fahrzeuge

Adaptive braking control method for a vehicle

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.12.2006 FR 0611227**

(43) Date de publication de la demande:
**25.06.2008 Bulletin 2008/26**

(73) Titulaire: **Messier-Bugatti-Dowty**
**78140 Velizy Villacoublay (FR)**

(72) Inventeurs:
• **Garcia, Jean-pierre**
 **31770, Colomiers (FR)**
• **Frank, David**
 **75013, Paris (FR)**

• **Gissinger, Gérard Léon**
 **68210, Balschwiller (FR)**
• **Basset, Michel**
 **68990, Heimsbrunn (FR)**
• **Chamaillard, Yann**
 **45130, Le Bardon (FR)**
• **Jacquet, Arnaud**
 **92140, Clamart (FR)**

(74) Mandataire: **Parzy, Benjamin Alain**
 **Cabinet Boettcher**
 **16, rue Médéric**
 **75017 Paris (FR)**

(56) Documents cités:
 **EP-A- 1 372 049**    **EP-A1- 0 630 786**
 **EP-A2- 0 219 023**    **WO-A-98/50262**

EP 1 935 732 B1

**Description**

L'invention concerne un procédé de commande adaptatif de freinage pour véhicule.

ARRIERE-PLAN DE L'INVENTION

On connaît des procédés de commande de freinage pour véhicule ayant plusieurs roues comportant des pneumatiques et équipées de freins, la commande générant pour chacune des roues une consigne de freinage en réponse à un ordre de freinage. La commande comprend une protection d'antiblocage comportant par exemple les étapes de, pour chaque roue :

- estimer un taux de glissement de la roue égal à $\tau$ =1-$R\omega/v$ où $R$ est le rayon de roulement de la roue, $\omega$ la vitesse de rotation de ladite roue, et $v$ la vitesse longitudinale de l'aéronef;
- si le taux de glissement est supérieur à un taux de glissement optimal, diminuer la consigne de freinage de cette roue de sorte que le taux de glissement redevienne inférieur au taux de glissement optimal, le taux de glissement optimal étant celui pour lequel le pneumatique porté par la roue développe avec la piste un coefficient de frottement maximal.

La consigne de freinage peut consister aussi bien en une pression hydraulique appliquée par des pistons dans le cas d'un frein hydraulique, un effort appliqué par les poussoirs d'actionneurs électromécaniques dans le cas d'un frein électrique, ou encore un couple de freinage à développer par le frein concerné.

Cette commande permet de limiter les départs au blocage des roues, ce qui améliore sensiblement la performance du freinage et permet d'arrêter le véhicule sur des distances plus courtes.

En général, le taux de glissement optimal est prédéterminé, par exemple à une valeur de 8%. Cependant, on sait que les caractéristiques de friction entre les roues et la piste sont essentiellement variables et que ce taux de glissement optimal est susceptible de varier en fonction des conditions rencontrées par les roues sur le sol (piste sèche, mouillée, enneigée, gelée...), de sorte que le taux de glissement optimal prédéterminé peut ne pas correspondre auxdites conditions.

On connaît des méthodes d'estimation permettant de remettre à jour certaines caractéristiques de friction entre la roue et la piste. Par exemple, le document DE 10 2005 001 770 décrit un procédé pour la régulation du taux de glissement dans un système antiblocage, comportant l'étape de recaler un modèle,d'adhérence paramétré représentatif d'une relation entre un coefficient de frottement et un taux de glissement, et d'en déduire un taux de glissement optimal recalé.

De même, le document EP 1 372 049 décrit comment déterminer un taux de glissement optimal compte tenu d'estimation ou de mesures, et comment réguler le freinage autour de ce taux de glissement optimal.

On connaît par ailleurs du document US 2003/0154012 une commande prédictive d'antiblocage qui prédit un taux de glissement futur à partir d'un modèle d'adhérence non paramétré, pour détecter une éventuelle tendance au blocage et modifier en conséquence la consigne de freinage afin d'éviter ce blocage.

OBJET DE L'INVENTION

L'invention a pour objet un procédé de commande de freinage amélioré.

BREVE DESCRIPTION DE L'INVENTION

En vue de la réalisation de ce but, on propose un procédé de commande de freinage pour véhicule comportant plusieurs roues comportant des pneumatiques et équipées de freins, la commande comportant la génération pour chacune des roues d'une consigne de freinage, comprenant les étapes de, pour chaque roue :

- recaler régulièrement un modèle d'adhérence représentatif d'une relation entre un coefficient de frottement et un taux de glissement de ladite roue;
- en utilisant le modèle d'adhérence régulièrement recalé, établir dans un horizon de prédiction donné une évolution de la consigne de freinage compte tenu d'un ordre de freinage à réaliser et compte tenu d'une contrainte de calcul donnée à respecter ;
- retenir pour valeur de la consigne de freinage une valeur de l'évolution ainsi déterminée qui correspond à un premier pas de calcul de l'horizon de prédiction.

Le recalage régulier de l'ensemble du modèle d'adhérence permet de travailler avec des dynamiques représentatives de l'état actuel de la piste. En particulier, il n'est plus besoin de faire des hypothèses sur l'état de la piste ou encore le rayon de roulement, ceux-ci étant pris en compte de façon automatique par le recalage régulier du modèle d'adhérence.

Ainsi, on prédit le comportement futur du système de freinage non plus sur la base d'un modèle d'adhérence fixe comme dans le document US 2003/0154012, ce qui peut occasionner des départs au blocage si le modèle d'adhérence fixe ne correspond pas à l'état actuel de la piste (par exemple si le modèle d'adhérence est un modèle d'adhérence de piste sèche alors que la piste est mouillée ou enneigée), mais sur la base d'un modèle d'adhérence régulièrement recalé, prenant en compte l'état actuel de la piste. La prédiction est ainsi beaucoup plus fiable. L'étape d'estimation future.

De préférence, la contrainte de calcul consiste à faire en sorte que la roue ne parte pas au blocage dans l'horizon de prédiction, et de préférence de faire en sorte que le taux de glissement ne dépasse pas un taux de glissement optimal pour lequel le taux d'adhérence est maximal.

BREVE DESCRIPTION DES DESSINS

L'invention sera mieux comprise à la lumière de la description qui suit en référence aux figures des dessins annexés parmi lesquelles :

- la figure 1 est une vue de côté schématique d'une roue d'aéronef ;
- la figure 2 est schéma-bloc d'une commande selon un mode particulier de mise en oeuvre de l'invention ;
- la figure 3 est un graphe d'un modèle d'adhérence couple d'adhérence/taux de glissement recalé selon l'invention ;
- la figure 4 est un graphe analogue au graphe précédent, illustrant le fonctionnement du régulateur prédictif équipant la commande selon un mode particulier de mise en oeuvre de l'invention.

DESCRIPTION DETAILLEE DE L'INVENTION

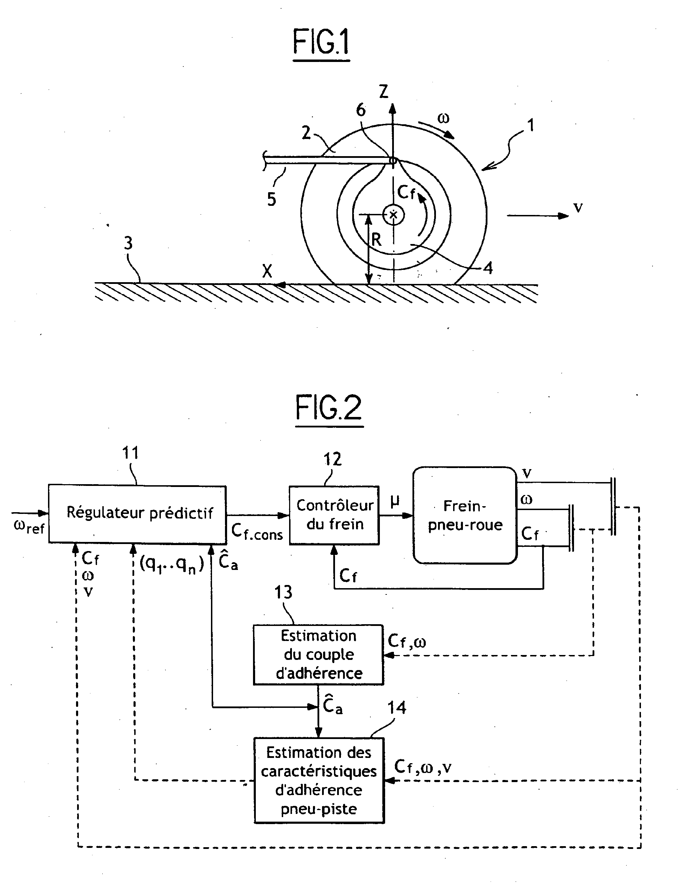

L'invention est décrite ici en application à un aéronef. En référence à la figure 1, une roue 1 d'aéronef est équipée d'un pneumatique 2 qui est en contact avec la piste 3. La roue 1 est équipée d'un frein 4 adapté à appliquer sélectivement un couple de freinage Cf en réponse à une consigne de freinage. La roue supporte une charge verticale Z et subit un effort de traînée X à l'interface entre le pneumatique et le sol, qui est relié à la charge verticale par la relation $X=\mu.Z$, où $\mu$ est un coefficient de frottement entre le pneumatique 2 et la piste 3 dépendant d'un taux de glissement égal à : $\tau = 1 - R\omega/v$ où $R$ est le rayon de roulement de la roue 1, $\omega$ la vitesse de rotation de la roue, et $v$ la vitesse longitudinale de l'aéronef. A l'effort de traînée X, on peut de façon équivalente associer un couple d'adhérence égal à $C_a = R.X = R.\mu.Z$. On remarquera que le couple d'adhérence est représentatif des évolutions du coefficient de frottement avec le taux de glissement dans la mesure où le couple d'adhérence et le coefficient de friction présentent un maximum sensiblement pour le même taux de glissement optimal.

La dynamique de la roue 1 est donnée par l'équation différentielle $I\dot{\omega}=C_a(\tau)-C_f$ où $I$ est l'inertie de la roue 1.

La commande de l'invention comporte tout d'abord l'étape de recaler régulièrement le modèle d'adhérence. Ici, on choisit de recaler un modèle d'adhérence liant les variations du couple d'adhérence $C_a$ avec le taux de glissement. Pour cela, on exploite:

- la mesure de la vitesse de la rotation $\omega$ de la roue fournie par un tachymètre;
- une estimation de la vitesse $v$ de l'aéronef par exemple fournie par les centrales inertielles de l'aéronef. En variante, la vitesse $v$ de l'aéronef pourra être reconstruite à l'aide des mesures des vitesses de rotation des roues de l'aéronef ;
- une mesure du couple de freinage Cf appliqué par le frein 4 sur la roue 1. Ici, le frein 4 est arrêté en rotation par une barre de reprise 5, dont l'axe de liaison au frein 4 peut être instrumenté pour fournir une mesure du couple appliqué par le frein 4.

Grâce à la mesure de $\omega$ et à la mesure de $v$, on estime le taux de glissement $\tau$. Grâce à la mesure du couple de freinage Cf, on déduit le couple d'adhérence par l'intermédiaire de l'équation dynamique $C_a(\tau) = I\dot{\omega}+C_f$. On normalise le couple d'adhérence Ca en le divisant par un couple de référence Co, et on obtient ainsi, à chaque pas de calcul un point $(C_a/C_0, \tau)_k$ où k est l'indice du pas de calcul.

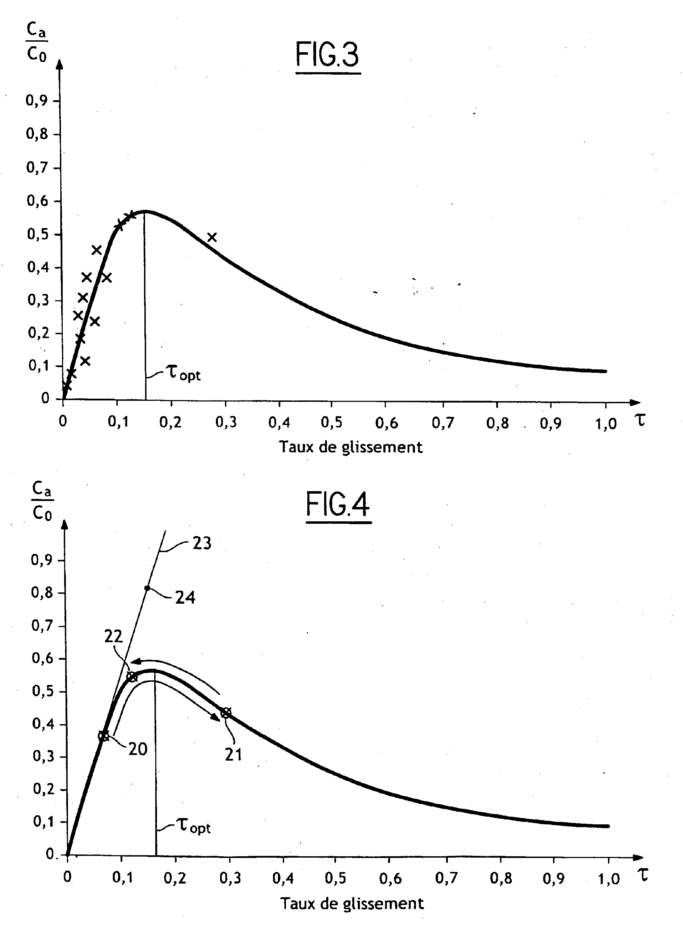

Ayant choisi un modèle d'adhérence paramétré, par exemple le modèle d'adhérence bien connu de Pacejka établissant une relation caractéristique entre le couple d'adhérence et le taux de glissement, on recale les paramètres du modèle d'adhérence par une méthode de régression, par exemple une méthode de moindres carrés. La figure 3 illustre graphiquement ce recalage. La relation $C_a/C_0 = f_{q1...qn}(\tau)$ représentée par la courbe en gras est ici recalée par rapport aux vingt points $(C_a/C_0,\tau)_k$ établis lors des vingt derniers pas de calcul, en estimant les paramètres $q_1...q_n$ par régression.

Ce recalage régulier permet de disposer d'un modèle d'adhérence réaliste et représentatif de l'état actuel de la piste. En pratique, le recalage du modèle d'adhérence est effectué suffisamment souvent pour éviter qu'un changement brusque de l'état de la piste (par exemple un passage sur une flaque d'eau) ne provoque un départ de la roue au blocage. Quelques simulations ont montré qu'un recalage tous les 50 à 100 ms pour un pas de calcul de 5 ms peut convenir, soit au moins un recalage tous les vingt pas de calcul. Si on dispose d'une importante capacité de calcul, il est bien sûr avantageux de recaler le modèle d'adhérence à chaque pas de calcul.

La courbe ainsi obtenue permet de déterminer le taux de glissement optimal $\tau_{opt}$ qui est illustré à la figure 3. C'est le taux de glissement pour lequel le couple d'adhérence est maximal. Le taux de glissement optimal $\tau_{opt}$ peut être déterminé soit en utilisant les paramètres $q_1...q_n$ recalés que l'on injecte dans une formule analytique fournissant le taux de glissement optimal $\tau_{opt}$, soit encore en cherchant de façon itérative le taux de glissement pour lequel la courbe du modèle d'adhérence présente une pente nulle. On dispose ainsi d'un taux de glissement optimal $\tau_{opt}$ régulièrement recalé, tenant compte de l'état actuel de la piste. Mais, grâce au recalage de la courbe complète, on dispose également de toute la dynamique du freinage, pour des taux de glissement allant de 0 à 1, cette dynamique étant donnée par la forme caractéristique de la relation en chaque point de fonctionnement $C_a/C_0,(\tau)$.

Selon l'invention, le modèle d'adhérence régulièrement recalé permet de mettre en oeuvre une commande prédictive de freinage, permettant de diminuer considérablement le risque de blocage de la roue.

En référence à la figure 2, la commande de l'invention, implantée dans un calculateur de freinage de l'aéronef, reçoit un ordre de freinage sous la forme d'une consigne , ici une vitesse de référence $\omega_{ref}$ qui est fournie à un régulateur prédictif 11, qui sera détaillé plus loin. Le régulateur prédictif 11 génère une consigne de freinage, ici sous la forme d'une consigne de couple de freinage $C_{f,cons}$. Un contrôleur 12 calcule à partir de la consigne de couple de freinage $C_{f,cons}$ et du couple de freinage mesuré $C_f$ une commande U à destination de l'organe d'actionnement du frein. Cet organe peut être une servovalve chargée de distribuer la pression dans le frein, auquel cas la commande U est un courant d'alimentation de la servovalve. Cet organe peut être un actionneur électromécanique de freinage, auquel cas la commande U est une consigne de position ou d'effort pour un onduleur chargé d'alimenter le moteur électrique de l'actionneur.

L'effort de freinage est appliqué en réponse à la commande U par le frein sur la roue, qui réagit en fonction de sa dynamique propre, de la dynamique de l'aéronef, et de l'état actuel de la piste.

La commande comporte également un estimateur du couple d'adhérence 13 qui fournit une estimation du couple d'adhérence $\hat{C}_a$ à partir du couple de freinage mesuré $C_f$ et de la vitesse de rotation de la roue □. L'estimation du couple d'adhérence $\hat{C}_a$ est d'une part fournie au régulateur prédictif 11, et d'autre part fournie à un module de recalage 14 d'un modèle d'adhérence, qui comme expliqué précédemment, recale régulièrement des paramètres $q_1...q_n$ du modèle d'adhérence $C_a/C_0 = f_{q1...qn}(\tau)$. Les paramètres $q_1...q_n$ recalés sont fournis au régulateur prédictif 11 afin qu'il puisse utiliser la dynamique tirée d'un modèle d'adhérence recalé tenant compte des conditions actuelles de la piste.

A chaque pas de calcul, soit ici tous les 5 ms, le régulateur prédictif 11 calcule une nouvelle valeur la consigne de couple de freinage $C_{f,cons}$, qui est déterminée comme suit. On considère un horizon de prédiction fuyant, ici pris égal à vingt pas de calcul à compter du pas de calcul précédent. A l'aide du modèle d'adhérence recalé et en tenant compte de sa forme caractéristique, le régulateur prédictif 11 détermine une évolution de la consigne de couple de freinage $C_{f,cons}$ qui permet de respecter, dans les conditions actuelles de piste données par le dernier recalage du modèle d'adhérence, l'ordre de freinage, ou une évolution prévisible de l'ordre de freinage dans le même horizon de prédiction.

Parmi toutes les évolutions possibles, on choisit ici de retenir une évolution de la consigne de couple de freinage pour laquelle, selon une contrainte de calcul donnée, le taux de glissement ne dépasse pas le taux de glissement optimal $\tau_{opt}$ déterminé à l'aide du modèle d'adhérence recalé. En pratique, et de façon connue en soi, une telle évolution est déterminée par un processus itératif en minimisant une fonction de coût J sous la contrainte $\tau \leq \tau_{opt}$.

A la figure 4, sur laquelle on a représenté graphiquement le résultat des étapes de calcul menées par le régulateur, on voit de façon schématique comment, en partant d'un point de fonctionnement initial 20 sur le modèle d'adhérence recalé, le régulateur prédictif 11 calcule une première évolution de la consigne de couple de freinage $C_{f,cons}$ qui amène le point de fonctionnement au bout de l'horizon de prédiction au point 21 sur la courbe représentative du modèle pour lequel le taux de glissement dépasse le taux de glissement optimal $\tau_{opt}$, puis, par le processus itératif mentionné, calcule des évolutions de la consigne de couple de freinage $C_{f,cons}$ qui ramènent le point de fonctionnement au bout de l'horizon de prédiction au point 22 pour lequel le taux de glissement reste en deçà du taux de glissement optimal $\tau_{opt}$.

Une fois déterminée une telle évolution de la consigne de couple de freinage $C_{f,cons}$, on en retient la valeur correspondant au premier pas de calcul de l'horizon de prédiction, que l'on prend comme valeur de la consigne de couple de freinage $C_{f,cons}$.

En variante, on pourra se contenter d'une prédiction simplifiée lors de laquelle on considère que l'ordre de freinage est constant sur l'horizon de prédiction. On recherche la valeur qui, au bout de l'horizon de prédiction, conduit à un point de fonctionnement proche du taux de glissement optimal, sans toutefois le dépasser.

Pour faire une bonne prédiction, il importe d'une part de disposer d'un modèle d'adhérence régulièrement recalé (contrairement au document US2003/0154012 qui enseigne d'effectuer une prédiction sur un modèle d'adhérence non recalé), mais également d'exploiter la dynamique non linéaire du modèle d'adhérence donné par la forme caractéristique de celui-ci. On remarquera en effet que le modèle d'adhérence est hautement non linéaire, notamment à proximité du taux de glissement optimal. Il importe donc de travailler avec la dynamique réelle du modèle d'adhérence, comme illustré à la figure 4. Sur un horizon de vingt pas de calcul, le point de fonctionnement peut se déplacer énormément de sorte qu'il s'éloigne sensiblement du point de fonctionnement initial. Si on avait, sur la figure 4, retenu uniquement la tangente 23 à la courbe au point de fonctionnement initial, on aurait alors prédit un point de fonctionnement 24 au bout de l'horizon de prédiction correspondant à un couple d'adhérence irréaliste, sans toutefois que le taux de glissement correspondant ne dépasse le taux de glissement optimal. Réaliser une prédiction en utilisant une linéarisation du modèle d'adhérence autour du point de fonctionnement initial rend donc cette prédiction plus aléatoire, notamment lorsque le point de fonctionnement est au voisinage du taux de glissement optimal, pouvant ainsi provoquer une surestimation de la capacité d'adhérence du pneumatique sur la piste, ce qui conduit à des départs au blocage. (On remarquera que dans le document DE 10 2005 001 770, la dynamique du modèle, c'est-à-dire en l'occurrence la valeur de la pente c1, n'est pas exploitée pour calculer une consigne de freinage. On ne s'intéresse qu'à son signe, aux fins de déterminer la position du taux de glissement optimal.)

Il est donc préférable de travailler avec la dynamique non-linéaire du modèle d'adhérence et donc de tenir compte de sa forme caractéristique recalée, à tout le moins autour du pont de fonctionnement actuel.

Ayant ainsi retenu l'utilisation d'un modèle d'adhérence régulièrement recalé et une prédiction tenant compte de la dynamique du modèle d'adhérence sur une plage étendue de taux de glissement, et non plus seulement au voisinage immédiat du point de fonctionnement, on diminue ainsi considérablement le risque de départ au blocage.

En pratique, le régulateur prédictif 11 et l'estimateur de modèle d'adhérence 14 travaillent en parallèle, et constituent avantageusement deux modules distincts dont l'un peut être modifié sans toucher à l'autre. On peut ainsi, avec le même régulateur prédictif 11, changer d'estimateur de modèle d'adhérence, ou à l'inverse, en retenant le même module d'adhérence, changer le régulateur prédictif, par exemple en modifiant l'horizon de prédiction ou le critère de coût J.

L'invention n'est pas limitée à ce qui vient d'être décrit, mais bien au contraire englobe toute variante entrant dans le cadre défini par les revendications.

En particulier, bien que l'on ait indiqué ici que l'on effectuait une prédiction à un horizon d'une vingtaine de pas de calcul, on pourra utiliser des horizons plus grands ou plus petits. En particulier, on pourra utiliser un horizon limité à un pas de temps, de sorte que l'on réalise ainsi une commande dite optimale.

On pourra en outre utiliser une autre contrainte de calcul que le non-dépassement du taux de glissement optimal. On peut en effet accepter des dépassements, à condition toutefois que ceux-ci ne conduisent pas trop souvent au blocage de la roue. On pourra par exemple utiliser comme contrainte un taux de glissement prédéterminé, ou fonction du taux de glissement optimal, par exemple égal à 1,1 fois le taux de glissement optimal. A l'inverse, on peut utiliser un taux de glissement fonction du taux de glissement optimal égal à 0,9 puis le taux de glissement optimal en vue de renforcer l'adhérence latérale à basse vitesse des pneumatiques.

On remarquera qu'il est équivalent de travailler non pas avec le taux de glissement, mais avec la vitesse de rotation de la roue. Cette dernière se déduit du taux de glissement par la formule $\omega = \dfrac{v}{R}\left(1-\tau\right)$. Ainsi,

plutôt que de travailler sur un modèle d'adhérence dépendant du taux de glissement, on peut travailler sur un modèle d'adhérence dépendant de la vitesse de rotation de la roue.

## Revendications

**1.** Procédé de commande de freinage pour véhicule comportant plusieurs roues (1) portant des pneumatiques (2) et équipées de freins (4), la commande comportant la génération pour chacune des roues d'une consigne de freinage ($C_{f,cons}$) en réponse à un ordre de freinage, comprenant les étapes de, pour chaque roue :

- recaler régulièrement un modèle d'adhérence ($C_a/C_0 = f_{q1...qn}(\tau)$) représentatif d'une relation entre un coefficient de frottement ($\mu$) et un taux de glissement de la roue ($\tau$) ;
- utiliser le modèle d'adhérence régulièrement recalé pour établir dans un horizon de prédiction donné une évolution de la consigne de freinage qui, tout en répondant à l'ordre de freinage et à son évolution prévisible pendant l'horizon de prédiction, respecte une contrainte de calcul donnée relative audit taux de glissement ($\tau$) ;
- retenir pour valeur de la consigne de freinage une valeur de l'évolution ainsi déterminée correspondant à un premier pas de calcul de l'horizon de prédiction.

**2.** Procédé de commande selon la revendication 1, dans lequel le recalage est effectué au moins une fois tous les 20 pas de calcul de la commande.

**3.** Procédé de commande selon la revendication 2, dans lequel le recalage est effectué à tous les pas de calcul de la commande.

**4.** Procédé de commande selon la revendication 1, dans lequel la contrainte de calcul consiste à imposer que le taux de glissement dans l'horizon de prédiction reste inférieur à un taux de glissement déterminé à partir d'un taux de glissement optimal ($\tau_{opt}$) tiré du modèle d'adhérence régulièrement recalé.

**5.** Procédé de commande selon la revendication 4, dans lequel le taux de glissement déterminé est égal au taux de glissement optimal.

**6.** Procédé de commande selon la revendication 1, dans lequel le recalage du modèle d'adhérence et la prédiction sont effectués en parallèle, dans deux modules distincts.

**7.** Procédé de commande selon la revendication 1, dans lequel l'horizon de prédiction est limité à un pas de calcul.

**8.** Calculateur de freinage mettant en oeuvre le procédé selon l'une des revendications précédentes.

## Patentansprüche

**1.** Verfahren zur Bremssteuerung für ein Fahrzeug, das mehrere Räder (1) umfasst, die Reifen (2) tragen und mit Bremsen (4) ausgestattet sind, wobei die Steuerung für jedes der Räder die Erzeugung eines Bremssollwertes ($C_{f,\,cons}$) in Antwort auf einen Bremsbefehl umfasst, umfassend für jedes Rad die Schritte:

- regelmäßiges Neubestimmen eines Haftmodells ($C_a/C_0 = f_{q1...qn}(\tau)$), das repräsentativ für eine Beziehung zwischen einem Reibungskoeffizienten ($\mu$) und einer Schlupfrate des Rades ($\tau$) ist,
- Verwenden des regelmäßig neubestimmten Haftmodells, um in einem gegebenen Vorhersagehorizont einen Verlauf des Bremssollwertes festzulegen, der, während er dem Bremsbefehl und seinem vorhersehbaren Verlauf während des Vorhersagehorizonts entspricht, eine gegebene Berechnungsbedingung in Bezug auf die genannte Schlupfrate ($\tau$) einhält,
- Berücksichtigen als Wert für den Bremssollwert einen Wert des so bestimmten Verlaufs, der einem ersten Rechenschritt des Vorhersagehorizonts entspricht.

2. Steuerungsverfahren nach Anspruch 1, wobei das Neubestimmen mindestens einmal alle 20 Rechenschritte der Steuerung erfolgt.

3. Steuerungsverfahren nach Anspruch 2, wobei das Neubestimmen bei jedem Rechenschritt der Steuerung erfolgt.

4. Steuerungsverfahren nach Anspruch 1, wobei die Berechnungsbedingung darin besteht, dass vorgeschrieben ist, dass die Schlupfrate in dem Vorhersagehorizont unter einer Schlupfrate bleibt, die aus einer optimalen Schlupfrate ($\tau_{opt}$) bestimmt wird, die aus dem regelmäßig neubestimmten Haftmodell gewonnen wird.

5. Steuerungsverfahren nach Anspruch 4, wobei die bestimmte Schlupfrate gleich der optimalen Schlupfrate ist.

6. Steuerungsverfahren nach Anspruch 1, wobei das Neubestimmen des Haftmodells und die Vorhersage parallel in zwei verschiedenen Modulen durchgeführt werden.

7. Steuerungsverfahren nach Anspruch 1, wobei der Vorhersagehorizont auf einen Rechenschritt begrenzt ist.

8. Bremsrechner, der das Verfahren nach einem der vorhergehenden Ansprüche anwendet.

**Claims**

1. A braking control method for a vehicle having a plurality of wheels (1) fitted with tires (2) and with brakes (4), the control method including generating a braking setpoint ($C_{f,set}$) for each wheel in response to a braking order, and comprising the following steps for each wheel:

   • regularly updating a grip model $C_a/C_0 = f_{q1,...qn}(\tau)$ representative of a relationship between a coefficient of friction ($\mu$) and a wheel slip rate ($\tau$);
   • using the regularly updated grip model to establish, in a given prediction horizon, the variation for the braking setpoint that, while complying with the braking order and predictable variation therein during the prediction horizon, also complies with a given calculation constraint ($\tau$) ; and
   • retaining as the value for the braking setpoint a value of the variation as determined in this way that corresponds to a first calculation cycle in the prediction horizon.

2. A control method according to claim 1, in which the updating of the grip model is performed at least once every 20 calculation cycles of the method.

3. A control method according to claim 2, in which updating of the grip model is performed once every calculation cycle of the method.

4. A control method according to claim 1, in which the calculation constraint consists in requiring the slip rate within the prediction horizon to remain less than a slip rate determined from an optimum slip rate ($\tau_{opt}$) derived from the regularly update grip model.

5. A control method according to claim 4, in which the determined slip rate is equal to the optimum slip rate.

6. A control method according to claim 1, in which the updating of the grip model and the prediction are performed in parallel in two distinct modules.

7. A control method according to claim 1, in which the prediction horizon is limited to one calculation cycle.

8. A braking computer implementing the method according to any preceding claim.

## FIG.1

## FIG.2

## FIG.3

$\dfrac{C_a}{C_0}$

Taux de glissement

$\tau_{opt}$

$\tau$

## FIG.4

$\dfrac{C_a}{C_0}$

Taux de glissement

$\tau_{opt}$

$\tau$

**EP 1 935 732 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005001770
- EP 1372049 A
- US 20030154012 A